# EUROPÄISCHE PATENTSCHRIFT

(11) **EP 2 419 325 B1**
(45) Veröffentlichungstag und Bekanntmachung des Hinweises auf die Patenterteilung: **18.09.2013**
(21) Anmeldenummer: 10717478.1
(22) Anmeldetag: 15.04.2010
(51) Int. Cl.: B64C 1/06

(54) **SPANT UND VERFAHREN ZUR HERSTELLUNG EINES SOLCHEN SPANTS**
FRAME AND METHOD FOR PRODUCING SUCH A FRAME
MEMBRURE ET PROCÉDÉ DE FABRICATION D'UNE TELLE MEMBRURE

(30) Priorität: 16.04.2009 AT 5902009
(43) Veröffentlichungstag der Anmeldung: 22.02.2012
(73) Patentinhaber: FACC AG, 4910 Ried im Innkreis (AT)
(72) Erfinder: LUTZ, Andreas, A-8042 Graz (AT)
(74) Vertreter: Sonn & Partner Patentanwälte
(86) Internationale Anmeldenummer: PCT/AT2010/000107
(87) Internationale Veröffentlichungsnummer: WO 2010/118448

(56) Entgegenhaltungen:
- DE-A1-102006 051 457
- DE-A1-102007 030 026
- US-A- 5 045 251
- US-A1- 2003 052 231
- US-B1- 6 638 466

## Beschreibung

Die Erfindung betrifft einen Spant zur Verstärkung des Rumpfes eines Fahrzeuges, insbesondere eines Luftfahrzeuges, gemäß dem Oberbegriff von Anspruch 1.

Weiters betrifft die Erfindung ein Verfahren zur Herstellung eines aus zumindest einem Spantelement bestehenden Spants gemäß dem Oberbegriff von Anspruch 8.

Spante sind tragende Bauteile zur Verstärkung bzw. Versteifung des Rumpfes bei Booten, Schiffen, Flugzeugen und anderen Fahrzeugen und bilden anschaulich die "Rippen" des Fahrzeuges. Üblicherweise wird eine Mehrzahl von ringförmigen Spanten in regelmäßigen Abständen umfangseitig an der Innenseite des Fahrzeugrumpfes angebracht. In Längsrichtung des Rumpfes sind Längsträger bzw. Stringer vorgesehen, welche quer zu den Spanten verlaufen und durch entsprechende Ausnehmungen der Spante passieren. Während im Schiffbau als Material für Spante und andere Strukturelemente häufig Holz oder Stahl verwendet wird, sind Spante für Flugzeuge im Hinblick auf eine Reduzierung des Gesamtgewichtes meist aus Aluminium oder anderen Leichtmetallen gefertigt.

Im Stand der Technik sind zum einen einteilige Aluminium-Spante bekannt, welche entsprechend der Krümmung des Flugzeug-Rumpfes geformt sind. Die Ausnehmungen für die Unterstruktur, welche durch die quer zu den Spanten verlaufenden Längsträger gebildet werden, werden dabei üblicherweise durch Fräsen oder Schneiden in den Spanten vorgesehen.

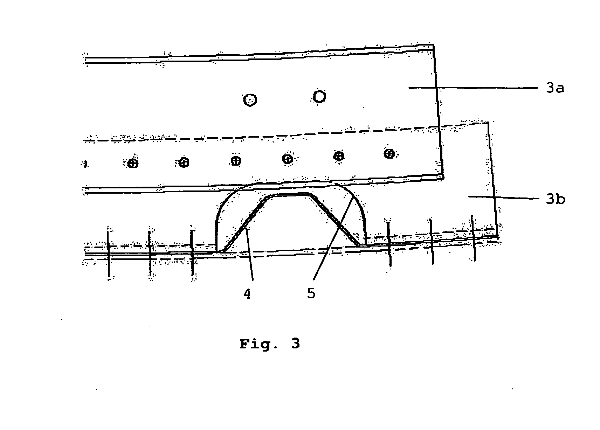

Zudem sind im Stand der Technik zweiteilige Spante mit einem Rahmen und einem am Flugzeugrumpf befestigten Spantfuß bekannt (vgl. Fig. 3). Der Rahmen wird dabei mit dem Spantfuß vernietet oder auf eine andere Weise fix verbunden. Die Ausnehmungen für die Längsträger werden dabei aus dem Spantfuß gefräst, wie auch nachstehend im Zusammenhang mit Fig. 3 erläutert wird.

Spante mit gefrästen Ausnehmungen sind jedoch in ihrer Herstellung sehr aufwendig. Im Hinblick auf die hohen Stückzahlen der Bauteile stellt das Fräsen jedenfalls einen erheblichen Kostenfaktor in der Fertigung dar.

Um das Fräsen der Ausnehmungen zu vermeiden, kommen vielfach differentielle Spante mit mehreren vernieteten Bauteilen zum Einsatz. Solche Spante bestehen aus einem einstückigen Rahmen, z.B. einem C-Profil, welcher über eine Vielzahl von an dem Rahmen befestigten Halteankern mit dem Rumpf fix verbunden ist. Die Halteanker sind dabei voneinander beabstandet angeordnet, so dass die Zwischenräume Ausnehmungen für den Durchtritt von Längsträgern bilden. Bei diesen Spanten verlaufen die Längsträger demnach zwischen den Halteankern, wobei die Längsträger unterhalb des Rahmens zu liegen kommen, so dass im Rahmen selbst keine Ausnehmungen vorgesehen werden müssen. Somit ist bei solchen Spanten zwar kein Fräsen der Ausnehmungen erforderlich, allerdings werden nachteiligerweise eine Vielzahl von Halteankern benötigt, um die Ausnehmungen für den Durchtritt der Längsträger auszubilden. Die Befestigung der Halteanker an dem Rahmen ist zudem zeitaufwendig und kostenintensiv.

Im Stand der Technik ist zudem prinzipiell bereits bekannt, faserverstärkte Kunststoffverbundwerkstoffe für Strukturbauteile in Flugzeugen zu verwenden. Durch den Einsatz von Faserverbundwerkstoffen wird das Gesamtgewicht des Flugzeuges verringert, so dass der Spritverbrauch erheblich gesenkt werden kann. Gleichzeitig zeichnen sich die aus Faserverbundwerkstoffen gefertigten Bauteile durch ihre hohe Festigkeit und Steifigkeit sowie ihre geringe Neigung zu Materialermüdung bzw. Korrosion aus.

Bei herkömmlichen Spanten aus Faserverbundwerkstoffen werden die Ausnehmungen für die Längsträger bzw. Stringer wie bei Aluminium-Spanten entweder durch Fräsen oder durch eine differentielle Bauweise erzeugt.

In der DE 10 2007 030 026 A1 ist ein Strukturbauteil für ein Luftfahrzeug mit einem Spantelement aus kohlenstofffaserverstärktem Kunststoff (CFK) gezeigt. Das Spantelement weist an der dem Rumpf zugewandten Seite einen entsprechend der inneren Krümmung des Flugzeug-Rumpfes gekrümmten Flansch auf, welcher zur Befestigung des Spantelementes am Rumpf dient. Zudem sind rumpfseitig eine Vielzahl von Ausnehmungen für den Durchtritt von Längsträgern vorgesehen. Diese Ausnehmungen werden im Fertigungsprozess durch Herausschneiden bzw. -fräsen in dem Spantelement vorgesehen. Dabei wird allerdings auch der Flansch im Bereich der Ausnehmungen entfernt, so dass der Flansch des fertigen Spantelementes im Bereich der Ausnehmungen unterbrochen ist. Hierdurch wird das Spantelement insgesamt geschwächt, da der Flansch von besonderer Bedeutung für die Steifigkeit bzw. Festigkeit des Spantelementes ist. In der DE 10 2007 030 026 A1 wird daher zur Erhöhung der mechanischen Stabilität vorgeschlagen, das Spantelement mit einem Querträgerelement zu vereinen, welches zwei Bogenabschnitte des Spantelementes quer miteinander verbindet. Dies ist jedoch konstruktiv aufwendig, wobei durch die zusätzlichen Querträgerelemente nachteiligerweise das Gesamtgewicht des Flugzeuges erhöht wird.

Die DE 10 2006 051 457 A1 zeigt ein Spantelement aus faserverstärktem Kunstoffverbundwerkstoff mit einem Fußabschnitt bzw. Flansch, welcher am Rumpf eines Luftfahrzeuges zur Anlage kommt, und Ausnehmungen für den Durchtritt von Stringern mit T-förmigem Profil. In den Bereichen zwischen den Ausnehmungen weist der Flansch eine stufenartig veränderte Dicke auf, so dass der Flansch passgenau der durch die Fußabschnitte der T-Stringer gebildeten stufenförmigen Unterstruktur folgt. Allerdings werden auch hier die Ausnehmungen durch Fräsen bzw. Schneiden in dem Spantelement eingebracht, so dass wiederum der Flansch im Bereich der Ausnehmungen unterbrochen ist. Demnach wird auch bei diesem Spantelement die mechanische Stabilität durch die gefrästen Ausnehmungen beeinträchtigt.

Ziel der vorliegenden Erfindung ist es demzufolge, einen konstruktiv einfachen Spant, insbesondere für Flugzeuge, zu schaffen, welcher geringes Gewicht und hohe mechanische Stabilität, insbesondere im Überlastfall, kombiniert. Zudem soll ein besonders kostengünstiges und effizientes Verfahren zur Herstellung eines solchen Spants geschaffen werden. Die Nachteile bekannter Spante und Verfahren zur Herstellung von Spanten sollen dabei vermieden oder zumindest reduziert werden.

Dies wird bei dem Spant der eingangs angeführten Art durch die Merkmale gemäß dem kennzeichnenden Teil von Anspruch 1 erzielt sowie, was das eingangs erwähnte Verfahren betrifft, durch die Merkmale gemäß dem kennzeichnenden Teil von Anspruch 8.

Indem der Spant einstückig aus faserverstärktem Kunstoffverbundwerkstoff hergestellt ist und die Ausnehmungen für den Durchtritt der Längsträger als integrale Aussparung jedes Spantelementes ausgebildet sind, kann das zeitaufwendige und kostenintensive Fräsen der Ausnehmungen vermieden werden. Gegenüber mehrteiligen Spantelementen ergibt sich zudem der Vorteil, dass ein der Unterstruktur genau angepasstes Spantelement direkt zur Verfügung gestellt wird, ohne die Notwendigkeit, einzelne Teile miteinander zu vernieten und im Flugzeug an den Längsträgern auszurichten. Durch die integrale Ausbildung der Aussparung wird schließlich ein besonders stabiler und steifer Spant zur Verfügung gestellt, welcher den hohen Anforderungen an seine Belastbarkeit bzw. mechanische Stabilität, auch im Überlastfall, genügt.Jedes Spantelement weist hierbei einen zur Anlage am Rumpf vorgesehenen Flansch auf, wobei der Flansch im Bereich einer Ausnehmung entsprechend der Kontur der Ausnehmung verlaufend angeordnet ist. Auf diese Weise wird ein durchlaufender Flansch bereitgestellt, welcher im Bereich der Ausnehmungen nicht unterbrochen ist. In den Bereichen zwischen den Ausnehmungen liegt der Flansch am Rumpf an und kann an diesem befestigt, z.B. vernietet, werden; in den Bereichen der Ausnehmungen wird der Flansch hochgezogen, so dass der Flansch der Kontur der Ausnehmungen folgt. Demnach folgt der Flansch auf der gesamten Erstreckung des Spantelementes der Kontur der Unterstruktur, welche durch den Rumpf bzw. die Längsträger gebildet wird. Mit Hilfe des durchlaufenden Flansches kann ein besonders stabiler Spant erzielt werden, da eine Verminderung der Stabilität durch das Fehlen des rumpfseitigen Flansches im Bereich der Ausnehmungen vermieden wird.

Zur Erhöhung der Steifigkeit des Spantelementes hat es sich als vorteilhaft herausgestellt, wenn das Spantelement einen im Wesentlichen T-förmigen, I-förmigen, Z-förmigen oder vorzugsweise C-förmigen Querschnitt aufweist.

Ein besonders stabiler und leichter Spant kann erzielt werden, wenn jedes Spantelement aus verflochtenen Fasern bzw. Faserbündeln und einer Matrix aus Kunststoff hergestellt ist.

Die Spantelemente sind vorzugsweise im Liquid-Moulding-Verfahren hergestellt, wobei sich insbesondere das Harzinjektionsverfahren bzw. RTM (Resin Transfer Moulding)- und VARTM (Vacuum Assisted RTM)-Verfahren als geeignet herausgestellt haben. Dabei werden die trockenen Fasern in eine geschlossene Form eingelegt, woraufhin die Form evakuiert und das flüssige Harz allenfalls unter Druck injiziert wird. Abschließend wird das Harz durch Wärmezufuhr ausgehärtet.

Alternativ dazu kann jedes Spantelement auch im PREPREG (preimpregnated fibres)-Verfahren hergestellt sein. Dabei werden mit Matrixwerkstoff vorimprägnierte, d.h. bereits getränkte, Fasern, Faserbündel oder Faser-Matten auf den Kern aufgebracht, entlüftet und allenfalls unter Druck und Hitze im Autoklav ausgehärtet.

Im Hinblick auf eine erhöhte Belastung der Spantelemente an Verbindungsstellen mit Strukturelementen, welche im Innenraum des Flugzeuges vorgesehen sein können, insbesondere einem Passagierraum- bzw. Frachtraumfußboden, ist es günstig, wenn jedes Spantelement an der vom Flansch abgewandten Seite Ausbuchtungen zur Aufnahme von Strukturelementen aufweist.

Bei einer besonders günstigen Ausführungsform des erfindungsgemäßen Verfahrens ist vorgesehen, dass Fasern oder Faserbündel auf einen Kern formschlüssig aufgebracht werden, wobei der Kern zur Ausbildung der integralen Aussparung jedes Spantelementes Einbuchtungen entsprechend den Ausnehmungen jedes Spantelementes aufweist. Demnach werden die Fasern, beispielsweise Carbon-, Glas-, oder Aramidfasern, zu Faserbündeln zusammengefasst und straff und eng aneinanderliegend auf dem Kern positioniert. Der Kern gibt dabei dem Spantelement seine spätere Gestalt, indem sein Querschnitt der gewünschten Profil-Geometrie, insbesondere C-, T-, I- oder Z-Profil, entspricht und der Kern zudem Einbuchtungen aufweist, welche den Ausnehmungen des fertigen Spantelementes entsprechen.

Insbesondere ist es günstig, wenn die Faserbündel auf dem Kern miteinander verflochten werden. Hierfür ist eine spezielle Flechtmaschine vorgesehen, mit welcher eine oder mehrere Lagen von vorzugsweise unidirektionalen Fasern auf dem Flechtkern miteinander verflochten werden.

Ein besonders effizientes und kostensparendes Verfahren zur Herstellung eines Spants kann erzielt werden, wenn der mit den Fasern bzw. verflochtenen Faserbündeln umwickelte Kern im Wesentlichen in einer Mittelebene seiner Längserstreckung geteilt wird, so dass zwei Spantelemente zur Verfügung gestellt werden. Demnach wird bei diesem bevorzugten Verfahren zunächst eine Vorform hergestellt, indem Fasern bzw. Faserbündel auf den Kern aufgebracht, insbesondere auf dem Kern miteinander verflochten, anschließend imprägniert und ausgehärtet werden. Diese Vorform wird anschließend geteilt, vorzugsweise in einer Mittelebene der Vorform, so dass zwei spiegelsymmetrische Spantelemente erhalten werden.

Dies kann mit besonderem Vorteil bei einem Kern mit im Wesentlichen quadratischem Querschnitt angewandt werden, wobei mit einer Teilung der Vorform in einer Mittelebene zwei Spantelemente mit im Wesentlichen C-förmigem Querschnitt zur Verfügung gestellt werden.

Soll das Spantelement als Hohlkörper ausgebildet werden, ist es günstig, wenn der Kern abschließend entfernt wird. Beispielsweise kann ein Schaumstoff-Kern chemisch aufgelöst werden. Besonders vorteilhaft ist allerdings ein wasserlöslicher Kern, welcher aus Sand bzw. Gips gepresst ist und abschließend auf einfache Weise mit Wasser ausgespült werden kann. Andererseits können auch wiederverwendbare Kerne, beispielsweise aus Aluminium, verwendet werden. Prinzipiell ist jedoch auch möglich, dass der Kern im fertigen Spantelement verbleibt.

Die Erfindung wird nachstehend anhand von in der Zeichnung dargestellten bevorzugten Ausführungsbeispielen, auf die sie jedoch nicht beschränkt sein soll, noch näher erläutert. Im Einzelnen zeigen in der Zeichnung:
Fig. 1 eine perspektivische Ansicht eines Abschnitts eines Flugzeugrumpfes;
Fig. 2 eine Schnittansicht des Flugzeugrumpfes gemäß Fig. 1;
Fig. 3 eine Detailansicht eines zweiteiligen Spants gemäß dem Stand der Technik;
Fig. 4a bzw. 4b jeweils eine perspektivische Ansicht einer Verstärkungsstruktur mit einem Spant und mehreren Längsträgern gemäß dem Stand der Technik;
Fig. 4c Stirnansichten auf das Spantelement gemäß Fig. 4b;
Fig. 5a bzw. 5b jeweils eine perspektivische Ansicht einer Verstärkungsstruktur mit einem erfindungsgemäßen C-Spant und mehreren Längsträgern;
Fig. 6 eine perspektivische Detailansicht des C-Spants gemäß den Fig. 5a und 5b; und
Fig. 7a bzw. 7b jeweils eine perspektivische Detailansicht der Verbindungsstellen eines Passagierraum-Fußbodens mit dem C-Spant gemäß den Fig. 5a, 5b und 6.

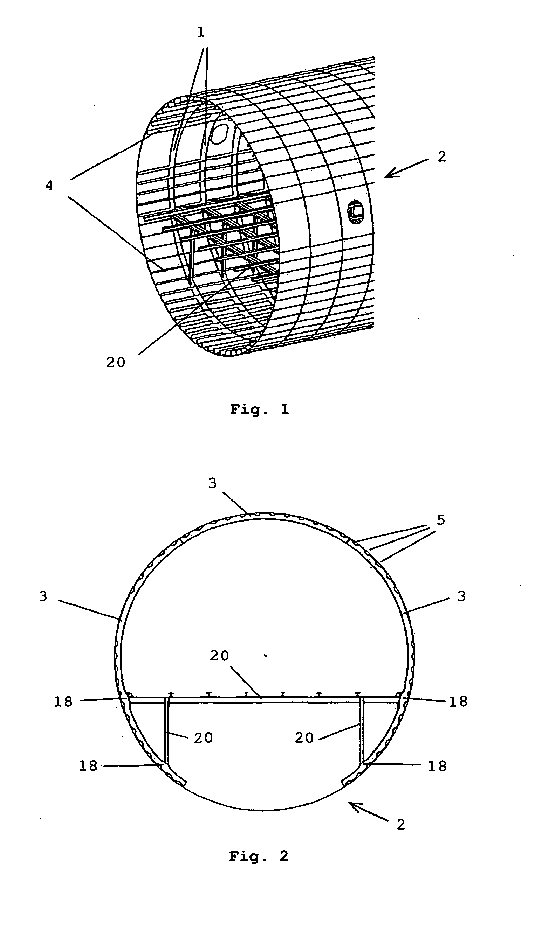

In Fig. 1 ist schematisch ein Flugzeugrumpf 2 mit im Wesentlichen zylindrischer Form dargestellt. Auf der Innenseite des Rumpfes 2 sind eine Vielzahl von regelmäßig beabstandeten Spanten 1 vorgesehen, welche ringförmig entsprechend der inneren Krümmung des Rumpfes 2 verlaufen. Quer zu den Spanten, in Längsrichtung des Rumpfes 2, sind in vorzugsweise regelmäßigen Winkelabständen Längsträger bzw. "Stringer" 4 vorgesehen, welche zusammen mit den Spanten 1 eine zweidimensionale Verstärkungs- bzw. Versteifungs-Struktur des Rumpfes 2 bilden.

Im Innenraum des Rumpfes 2 sind weitere Strukturelemente 20, wie z.B. ein Frachtraum- oder Passagierraumfußboden 20, vorgesehen. Der Passagierraumfußboden 20 weist dabei mehrere im Wesentlichen vertikal angeordnete Stützstreben auf, mit welchen der Fußboden 20 am Rumpf 2 abgestützt wird; zudem sind eine Vielzahl von regelmäßig beabstandeten Querbalken vorgesehen, welche senkrecht zu den Stützstreben angeordnet sind und auf herkömmliche Weise mit diesen fix verbunden sind.

Der Spant 1 kann aus mehreren Spantelementen 3 bestehen; in Fig. 2 sind drei Spantelemente 3 dargestellt, welche an ihren jeweiligen Endabschnitten über an sich bekannte Verbindungselemente wie Haltebügel oder dergleichen miteinander verbunden sind, so dass insgesamt ein ringförmiger Spant 1 zur Verfügung gestellt wird.

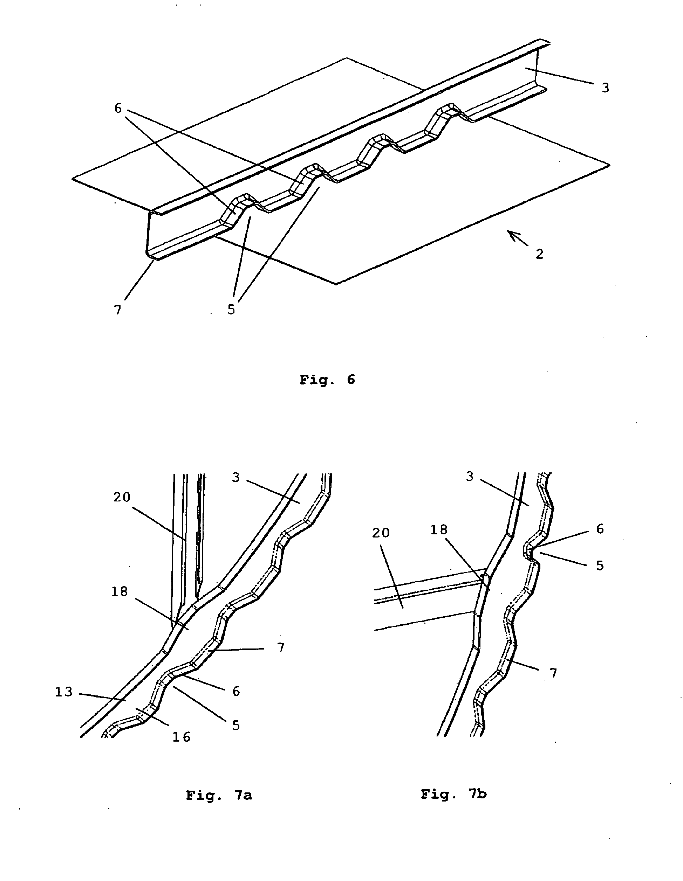

Wie in Fig. 2 ersichtlich, sind an der dem Rumpf 2 zugewandten Seite der Spantelemente 3 Ausnehmungen 5 vorgesehen, durch welche die in Fig. 2 aus Gründen der besseren Übersichtlichkeit nicht dargestellten Längsträger 4 verlaufen. An die Verbindung der Stützstreben bzw. der Querbalken des Passagierraumfußbodens mit den Spanten 1 werden hinsichtlich der Lastaufnahme besondere Anforderungen gestellt. Hierfür können einzelne Spantelemente 3 im Bereich der Verbindungsstellen mit dem Passagierraumfußboden verstärkte Stellen, insbesondere Ausbuchtungen 18 aufweisen, an welchen die jeweiligen Stützstreben bzw. Querbalken des Passagierraumfußbodens 20 befestigt sind, wie im Zusammenhang mit den Fig. 7a und 7b näher erläutert wird.

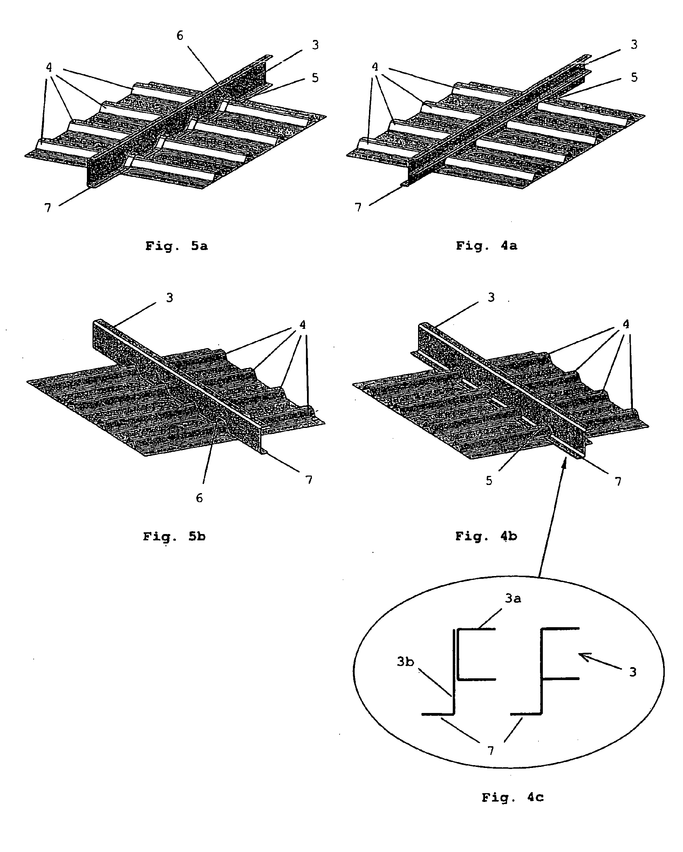

Die Fig. 3 und 4a bis 4c zeigen herkömmliche Spantelemente 3 für einen Flugzeugrumpf 2, wie sie aus dem Stand der Technik bereits bekannt sind. Im Speziellen ist in Fig. 3 ein zweiteiliger Spant 3a, 3b dargestellt, welcher aus einem einstückigen Rahmen 3a, beispielsweise einem C-Profil 3a, und einem Spantfuß 3b besteht. Der Spantfuß 3b weist einen unteren Flansch 7 auf, welcher an der Innenseite des Rumpfes 2 zur Anlage kommt und zur Befestigung des Spants 3a, 3b am Rumpf 2 dient. Das C-Profil 3a ist im Bereich seiner dem Rumpf 2 abgewandten Seite mit dem Spantfuß 3b fix verbunden, insbesondere verschraubt oder vernietet, so dass insgesamt ein Spant mit im Wesentlichen F-förmigem Querschnitt zur Verfügung gestellt wird. Im Spantfuß 3b sind auf der dem Rumpf 2 zugewandten Seite gefräste Ausnehmungen 5 für den Durchtritt der Längsträger 4 vorgesehen.

Die Fig. 4a und 4b zeigen perspektivische Ansichten von bekannten Spanten 3 mit einer Mehrzahl von Längselementen 4, welche durch die Ausnehmungen 5 passieren. Die dargestellten Spante 3 weisen ein F-Profil mit spiegelverkehrt ausgerichtetem, unterem Flansch 7 auf, wobei das F-Profil sowohl zweistückig, wie im Zusammenhang mit Fig. 3 erläutert, oder einstückig ausgebildet sein kann. In Fig. 4c ist auf der linken Seite ein zweistückiges F-Profil mit einem Spantfuß 3b und einem am Spantfuß 3b befestigten C-Profil 3a gezeigt; auf der rechten Seite von Fig. 4c ist ein einteiliger F-Spant dargestellt.

Bei beiden bekannten Techniken werden die Ausnehmungen 5 durch Fräsen, Schneiden und dergleichen in den Spanten vorgesehen. Wie insbesondere in Fig. 4b ersichtlich, geht hiermit jedoch eine nachteilige Schwächung des Spantelementes einher, indem in den Bereichen der Ausnehmungen 5 der untere Flansch 7 entfernt wird.

Das sogenannte "Fail-Safe"-Prinzip, wonach die Auswirkungen eines Versagens der Spante so ungefährlich wie möglich zu gestalten sind, bedingt bei den bekannten Spanten eine Profil-Geometrie mit mehreren Flanschen, insbesondere die in Fig. 4c gezeigte F-Geometrie, um die nachteilige Auswirkung des fehlenden unteren Flansches 7 im Bereich der Ausnehmungen 5 auf die Stabilität des Spants gering zu halten.

Andere Profilgeometrien würden demnach durch das teilweise Entfernen des unteren Flansches mit dem Fräsen der Ausnehmungen 5 stark geschwächt; ein C-Profil würde beispielsweise im Bereich der Ausnehmungen 5 ca. 40% seiner Querschnittsfläche verlieren, so dass die geforderte Lastaufnahme, insbesondere was die Druckbelastung betrifft, nicht mehr zuverlässig gewährleistet wäre.

In den Fig. 5a und 5b ist ein erfindungsgemäßes Spantelement 3 gezeigt, welches einstückig aus faserverstärktem Kunststoff hergestellt ist, wobei die Ausnehmungen 5 als integrale Aussparung 6 ausgebildet sind, d.h. nicht durch aufwendige und kostenintensive Maßnahmen wie Fräsen, Schneiden und dergleichen in dem Spantelement 3 vorgesehen sind. Durch die integrale Ausbildung der Aussparung 6 wird überdies die "Fail-Safe"-Bedingung eingehalten, indem das Spantelement nicht durch das Fräsen der Ausnehmungen 5 geschwächt wird. Wie in Fig. 5a ersichtlich, ermöglicht die integrale Ausbildung der Aussparung 6 einen C-förmigen Querschnitt, wodurch vorteilhafterweise das Gewicht des Spantelementes gegenüber F-Profilen oder anderen Geometrien mit drei oder mehr Flanschen erheblich reduziert werden kann.

Die Ausnehmungen 5 sind vorzugsweise in regelmäßigen Winkelabständen entlang des Umfangs jedes Spantelementes 3 angeordnet. Im dargestellten Ausführungsbeispiel weisen die Ausnehmungen 5 die Form eines Prismas mit im Wesentlichen trapezförmiger Grundfläche auf, wobei hier auch andere Ausführungen denkbar sind, beispielsweise eine rechteckige Grundfläche und insbesondere auch eine Geometrie mit abgerundeten Kanten.

Der untere Flansch 7 des C-förmigen Spantelementes 3 folgt dabei der durch den Rumpf 2 und die Vielzahl an Längsträgern 4 gebildeten Unterstruktur. Im Bereich der Ausnehmungen 5 ist der Flansch 7 entsprechend der Kontur der Ausnehmungen 5 verlaufend angeordnet und kommt auf den Längsträgern 4 zu liegen. Indem der Flansch 7 der Kontur der Ausnehmungen 5 bzw. der komplementär gestalteten Längsträger 4 folgt, verläuft der Flansch 7 auch im Bereich der Ausnehmungen 5 ohne Unterbrechungen. Durch das Hoch-bzw. Herunterziehen des Flansches 7 im Bereich der integralen Aussparung 6 wird nur wenig Fläche verloren, da der Flansch 7 nicht durch das Fräsen der Ausnehmungen 5 entfernt wird.

Selbstverständlich wird durch die integrale Ausbildung der Aussparung 6 auch bei anderen Profil-Geometrien eine erhöhte Belastbarkeit erzielt. Denkbar sind in diesem Zusammenhang beispielsweise Spantelementen 3 mit I-förmigem, Z-förmigem oder T-förmigem Querschnitt.

In Fig. 6 ist eine Detailansicht des erfindungsgemäßen Spantelementes 3 dargestellt, wobei der besseren Übersichtlichkeit halber auf eine Darstellung der Längsträger 4 verzichtet wurde. Das Spantelement 3 besteht dabei aus miteinander verflochtenen Fasern bzw. Faserbündeln aus Carbon, Glas, Aramid und dergleichen, welche mit einem Matrixwerkstoff aus Kunststoff, beispielsweise Epoxidharz, imprägniert sind.

Zur Bereitstellung des gezeigten Spantelementes 3 mit C-förmigem Querschnitt wird ein Kern mit den Fasern bzw. Faserbündeln passgenau umwickelt. Vorzugsweise werden eine Vielzahl von unidirektionalen Fasern zu Faserbündeln verbunden und anschließend auf dem Flechtkern miteinander verflochten. Die Form des Flechtkerns entspricht dabei genau der gewünschten Gestalt des herzustellenden Spantelementes. Hierfür weist der Kern eine Vielzahl von Einbuchtungen auf, welche in ihrer Form den Ausnehmungen 5 des fertigen Spantelementes entsprechen. Auf diese Weise werden die Ausnehmungen 5 als integrale Aussparung 6 ausgebildet und müssen nicht in einem aufwendigen und kostspieligen Schritt gesondert ausgefräst bzw. herausgeschnitten werden.

Die Fasern sind mit einer Matrix aus Kunststoff verbunden, wobei die Imprägnierung vor dem Aufbringen auf den Flechtkern (im sogenannten PREPREG-Verfahren) oder nach der Verflechtung auf dem Flechtkern (mit Hilfe des Resin Transfer Moulding- bzw. Vacuum Assisted Resin Transfer Moulding-Verfahrens) erfolgen kann.

Bei der Herstellung der C-Spantelemente wird zunächst eine Vorform gefertigt, indem Faserbündel auf einem Flechtkern mit quadratischem Querschnitt und entsprechend der Form der Ausnehmungen des späteren Spantelementes geformten Einbuchtungen verflochten werden. Anschließend wird die Vorform in ihrer Mittelebene auseinander geschnitten, um auf diese Weise zwei spiegelverkehrte C-Spantelemente zu erhalten. Der Kern kann abschließend entfernt und wiederverwendet werden; bei Vorliegen eines Schaumstoff-Kerns bzw. eines Kerns aus gepresstem Sand und Gips kann der Kern auch chemisch aufgelöst bzw. mit Wasser herausgespült werden.

Die Fig. 7a bzw. 7b zeigen Detailansichten von den Verbindungsstellen der Stützstreben bzw. der Querbalken des Passagierraumfußbodens 20 mit den jeweiligen Spantelementen 3. Die Endabschnitte der Stützstreben bzw. der Querbalken sind mit den entsprechenden Bereichen der Spantelemente 3 vernietet oder auf andere Weise zuverlässig verbunden. Um der erhöhten Belastung an den Verbindungsstellen Stand zu halten, weisen die Spantelemente 3 in diesem Bereich Ausbuchtungen 18 auf, mit welchen die Querschnittsfläche des C-Profils erhöht wird. Die Ausbuchtungen 18 werden in der Fertigung durch zumindest eine zusätzliche Lage von Fasern bzw. verflochtenen Faserbündeln in diesem Bereich erzeugt.

Beim gezeigten Ausführungsbeispiel erstreckt sich die Ausbuchtung 18 im Wesentlichen in Richtung des Innenraums, indem der Verbindungsbereich zwischen dem rumpfseitigen Flansch 7 und dem rumpfabgewandten Flansch des C-Profils im Bereich der Verbindungsstellen vergrößert wird; zur weiteren Verstärkung der Verbindungstellen können die Flansche auch mit einer größeren Erstreckung in Längsrichtung des Rumpfes 2 versehen werden.

Die Forschungsarbeit, die zur vorliegenden Erfindung geführt hat, wurde von der Europäischen Union im Zusammenhang mit dem Siebten Rahmenprogramm (FP7/2007-2013) unter der Förder-Vereinbarung Nr. 213371 gefördert.

## Patentansprüche

1. Spant (1) zur Verstärkung des Rumpfes (2) eines Fahrzeuges, insbesondere eines Luftfahrzeuges, mit zumindest einem gekrümmten Spantelement (3) mit Ausnehmungen (5) an der zur Anlage am Rumpf (2) vorgesehenen Seite (16) für den Durchtritt von Längsträgern (4) des Fahrzeuges, wobei jedes Spantelement (3) einen zur Anlage am Rumpf (2) vorgesehenen Flansch (7) aufweist, wobei jedes Spantelement (3) einstückig aus einem faserverstärkten Kunststoffverbundwerkstoff hergestellt ist und die Ausnehmungen (5) als integrale Aussparung (6) jedes Spantelementes (3) ausgebildet sind, wobei jedes Spantelement (3) aus geflochtenen Fasern bzw. Faserbündeln und einer Matrix aus Kunststoff hergestellt ist **dadurch gekennzeichnet, dass** der Flansch (7) im Bereich einer Ausnehmung (5) entsprechend der Kontur der Ausnehmung (5) verlaufend angeordnet ist.

2. Spant (1) gemäß Anspruch 1, **dadurch gekennzeichnet, dass** jedes Spantelement (3) einen im Wesentlichen T-förmigen, I-förmigen, Z-förmigen oder vorzugsweise C-förmigen Querschnitt aufweist.

3. Spant (1) gemäß Anspruch 1 oder 2, **dadurch gekennzeichnet, dass** jedes Spantelement (3) im Liquid-Moulding-Verfahren hergestellt ist.

4. Spant (1) gemäß Anspruch 1 oder 2, **dadurch gekennzeichnet, dass** jedes Spantelement (3) im PREPREG (preimpregnated fibres)-Verfahren hergestellt ist.

5. Spant (1) gemäß einem der Ansprüche 1 bis 4, **dadurch gekennzeichnet, dass** jedes Spantelement (3) an der vom Flansch (7) abgewandten Seite (13) Ausbuchtungen (18) zur Aufnahme von Strukturelementen (20) aufweist.

6. Spant (1) gemäß einem der Ansprüche 1 bis 5, **dadurch gekennzeichnet, dass** jede Ausnehmung (5) die Form eines Prismas mit im Wesentlichen trapezförmiger Grundfläche aufweist, wobei die Kanten der Ausnehmung (5) vorzugsweise abgerundet sind.

7. Spant (1) gemäß einem der Ansprüche 1 bis 6, **dadurch gekennzeichnet, dass** die Ausnehmungen (5) in vorzugsweise regelmäßigen Winkelabständen entlang des Umfangs jedes Spantelementes (3) angeordnet sind.

8. Verfahren zur Herstellung eines aus zumindest einem Spantelement (3) bestehenden Spants (1) zur Verstärkung des Rumpfes eines Fahrzeuges, insbesondere eines Luftfahrzeuges, wobei jedes Spantelement (3) entsprechend mit einer Krümmung geformt wird und an der zur Anlage am Rumpf (2) vorgesehenen Seite (16) Ausnehmungen (5) für den Durchtritt von Längsträgern (4) vorgesehen werden, wobei jedes Spantelement (3) einen zur Anlage am Rumpf (2) vorgesehenen Flansch (7) aufweist, **dadurch gekennzeichnet, dass** der Flansch (7) im Bereich einer Ausnehmung (5) entsprechend der Kontur der Ausnehmung (5) verläuft, wobei jedes Spantelement (3) einstückig aus einem faserverstärkten Kunststoffverbundwerkstoff geformt wird und die Ausnehmungen (5) als integrale Aussparung (6) jedes Spantelementes (3) ausgebildet werden, wobei Fasern bzw. Faserbündel auf einen Kern formschlüssig aufgebracht werden und der Kern zur Ausbildung der integralen Aussparung (6) jedes Spantelementes (3) Einbuchtungen entsprechend den Ausnehmungen (5) jedes Spantelementes (3) aufweist und die Fasern bzw. Faserbündel auf dem Kern miteinander verflochten werden.

9. Verfahren zur Herstellung eines Spants (1) gemäß Anspruch 8, **dadurch gekennzeichnet, dass** jedes Spantelement (3) als T-Profil, I-Profil, Z-Profil oder vorzugsweise C-Profil geformt wird.

10. Verfahren zur Herstellung eines Spants (1) gemäß Anspruch 8 oder 9, **dadurch gekennzeichnet, dass** zur Ausbildung des faserverstärkten Kunststoffverbundwerkstoffes die Fasern mit einem Matrixwerkstoff aus Kunstoff imprägniert werden.

11. Verfahren zur Herstellung eines Spants (1) gemäß einem der Ansprüche 8 bis 10, **dadurch gekennzeichnet, dass** der auf den Kern aufgebrachte Faser-Kunststoffverbundwerkstoff abschließend entlüftet und unter Druck und Hitze ausgehärtet wird.

12. Verfahren zur Herstellung eines Spants (1) gemäß einem der Ansprüche 8 bis 11, **dadurch gekennzeichnet, dass** der mit den Fasern bzw. verflochtenen Faserbündeln umwickelte Kern im Wesentlichen in einer Mittelebene seiner Längserstreckung geteilt wird, so dass zwei Spantelemente (3) zur Verfügung gestellt werden.

13. Verfahren zur Herstellung eines Spants (1) gemäß einem der Ansprüche 8 bis 12, **dadurch gekennzeichnet, dass** der Kern einen im Wesentlichen quadratischen Querschnitt aufweist.

14. Verfahren zur Herstellung eines Spants (1) gemäß einem der Ansprüche 8 bis 13, **dadurch gekennzeichnet, dass** der Kern abschließend entfernt wird.

## Claims

1. A frame (1) for reinforcing the hull (2) of a craft, particularly an aircraft, comprising at least one curved frame element (3) that has recesses (5) at the side (16) provided for resting against the hull (2) for the passage of longitudinal beams (4) of the craft, wherein each frame element (3) comprises a flange (7) provided for resting against the hull (2), wherein each frame element (3) is integrally formed from a fibre-reinforced plastic composite material and the recesses (5) are designed as integral pockets (6) of each frame element (3), wherein each frame element (3) is produced from interwoven fibres and/or bundles of fibres and a matrix made of plastic, **characterised in that** said flange (7) is arranged in the region of a recess (5) extending along the outline of said recess (5).

2. The frame (1) according to claim 1, **characterised in that** each frame element (3) has a substantially T-shaped, I-shaped, Z-shaped or preferably C-shaped cross section.

3. The frame (1) according to claim 1 or 2, **characterised in that** each frame element (3) is produced by the liquid moulding method.

4. The frame (1) according to claim 1 or 2, **characterised in that** each frame element (3) is produced by the PREPREG (pre-impregnated fibres) method.

5. The frame (1) according to any one of claims 1 to 4, **characterised in that** each frame element (3) comprises bulges (18) for receiving structural elements (20) at the side (13) facing away from the flange (7).

6. The frame (1) according to any one of claims 1 to 5, **characterised in that** each recess (5) has the shape of a prism with a substantially trapezium-shaped base area, wherein the edges of said recess (5) are preferably rounded.

7. The frame (1) according to any one of claims 1 to 6, **characterised in that** the recesses (5) are arranged circumferentially on each frame element (3), spaced apart at preferably regular angular intervals.

8. A method for producing a frame (1), consisting of at least one frame element (3), for reinforcing the hull (2) of a craft, particularly an aircraft, wherein each frame element (3) is accordingly shaped with a curvature and recesses (5) are provided at the side (16) provided for resting against the hull (2) for the passage of longitudinal beams (4), wherein each frame element (3) comprises a flange (7) provided for resting against the hull (2), **characterised in that** said flange (7) extends in the region of a recess (5) along the outline of said recess (5), wherein each frame element (3) is integrally formed from a fibre-reinforced plastic composite material and the recesses (5) are designed as integral pockets (6) of each frame element (3), wherein fibres and/or bundles of fibres are applied form-fit to a core and said core comprises indentations corresponding to the recesses (5) of each frame element (3) for forming the integral pocket (6) of each frame element, and the fibres and/or bundles of fibres are interwoven with each other on said core.

9. The method for producing a frame (1) according to claim 8, **characterised in that** each frame element (3) is shaped as a T profile, I profile, Z profile or preferably C profile.

10. The method for producing a frame (1) according to claim 8 or 9, **characterised in that** the fibres are impregnated with a matrix material made of plastic to form the fibre-reinforced plastic composite material.

11. The method for producing a frame (1) according to any one of claims 8 to 10, **characterised in that** the fibre plastic composite material applied to the core is vented and cured under pressure and heat to be finished.

12. The method for producing a frame (1) according to any one of claims 8 to 11, **characterised in that** the core that is wrapped by the fibres and/or the interwoven bundles of fibres is parted substantially in a central plane of its longitudinal extension so that two frame elements (3) are provided.

13. The method for producing a frame (1) according to any one of claims 8 to 12, **characterised in that** the core has a substantially square-shaped cross section.

14. The method for producing a frame (1) according to any one of claims 8 to 13, **characterised in that** the core is removed in the end.

## Revendications

1. Membrure (1) pour le renforcement du fuselage (2) d'un véhicule, plus particulièrement d'un aéronef, avec au moins un élément de membrure incurvé (3) avec des évidements (5) sur le côté (16) destiné à être appuyé sur le fuselage (2), pour le passage de longerons (4) du véhicule, chaque élément de membrure (3) comprenant une bride (7) destinée à être appuyée contre le fuselage (2), chaque élément de membrure (3) étant réalise d'une seule pièce dans une matière plastique composite renforcée de fibres et les évidements (5) étant conçus comme une ouverture intégrale (6) de chaque élément de membrure (3), chaque élément de membrure (3) étant constitué de fibres ou de faisceaux de fibres tressés et d'une matrice de matière plastique, **caractérisée en ce que** la bride (7) est disposée au niveau d'un évidement (5) de façon à suivre le contour de l'évidement (5).

2. Membrure (1) selon la revendication 1, **caractérisée en ce que** chaque élément de membrure (3) présente une section globalement en forme de T, de I, de Z ou de préférence en forme de C.

3. Membrure (1) selon la revendication 1 ou 2, **caractérisée en ce que** chaque élément de membrure (3) est fabriqué à l'aide d'un procédé de moulage liquide.

4. Membrure (1) selon la revendication 1 ou 2, **caractérisée en ce que** chaque élément de membrure (3) est fabriqué à l'aide du procédé PREPREG (fibres préimprégnées).

5. Membrure (1) selon l'une des revendications 1 à 4, **caractérisée en ce que** chaque élément de membrure (3) comprend, sur le côté (13) opposé à la bride (7), des renflements (18) permettant de supporter des éléments de structure (20).

6. Membrure (1) selon l'une des revendications 1 à 5, **caractérisée en ce que** chaque évidement (5) présente la forme d'un prisme avec une surface de base globalement trapézoïdale, les arêtes de l'évidement (5) étant de préférence arrondies.

7. Membrure (1) selon l'une des revendications 1 à 6, **caractérisée en ce que** les évidements (5) sont disposés de préférence à des intervalles angulaires réguliers le long de la circonférence de chaque élément de membrure (3).

8. Procédé de fabrication d'une membrure (1) constituée d'au moins un élément de membrure (3), pour le renforcement du fuselage d'un véhicule, plus particulièrement d'un aéronef, chaque élément de membrure (3) étant par conséquent formé avec une courbure et, sur le côté (16) destiné à être appuyé sur le fuselage (2), sont prévus des évidements (5) pour le passage de longerons (4), chaque élément de membrure (3) comprenant une bride (7) destinée à être appuyée contre le fuselage (2), **caractérisé en ce que** la bride (7) suit le contour de l'évidement (5) au niveau de l'évidement (5), chaque élément de membrure (3) étant réalisé d'une seule pièce dans une matière plastique composite renforcée de fibres et les évidements (5) étant conçus comme une ouverture intégrale (6) de chaque élément de membrure (3), des fibres ou des faisceaux de fibres étant appliqués, avec une complémentarité de forme, sur une âme et l'âme comprenant, pour la formation de l'ouverture intégrale (6) de chaque élément de membrure (3), des renflements correspondant aux évidements (5) de chaque élément de membrure (3) et les fibres ou faisceaux de fibres étant tressés ensemble sur l'âme.

9. Procédé de fabrication d'un élément de membrure (1) selon la revendication 8, **caractérisé en ce que** chaque élément de membrure (3) présente un profil en T, en I, en Z ou, de préférence, en C.

10. Procédé de fabrication d'un élément de membrure (1) selon la revendication 8 ou 9, **caractérisé en ce que**, pour la formation de la matière plastique composite renforcé de fibres, les fibres sont imprégnées d'un matériau matriciel de type matière plastique.

11. Procédé de fabrication d'un élément de membrure (1) selon l'une des revendications 8 à 10, **caractérisé en ce que** la matière plastique composite à fibres appliquée sur l'âme est finalement désaérée et durcie sous l'effet de la pression et de la chaleur.

12. Procédé de fabrication d'un élément de membrure (1) selon l'une des revendications 8 à 11, **caractérisé en ce que** l'âme entourée par les fibres ou faisceaux de fibres tressés est divisée globalement au niveau d'un plan central de son extension longitudinale, de façon à ce que deux éléments de membrure (3) soient disponibles.

13. Procédé de fabrication d'un élément de membrure (1) selon l'une des revendications 8 à 12, **caractérisé en ce que** l'âme présente une section globalement carrée.

14. Procédé de fabrication d'un élément de membrure (1) selon l'une des revendications 8 à 13, **caractérisé en ce que** l'âme est finalement retirée.
